# FASCICULE DE BREVET EUROPEEN

(11) **EP 4 005 260 B1**
(45) Date de publication et mention de la délivrance du brevet: **26.08.2026**
(21) Numéro de dépôt: 20756911.2
(22) Date de dépôt: 23.07.2020
(51) Int. Cl.: H04W 12/37, H04W 4/60, H04W 8/18, H04W 8/22, H04W 8/20, H04W 12/30

(54) **ADAPTATION DYNAMIQUE D'UN ENVIRONNEMENT D'EXÉCUTION D'ÉLÉMENT SÉCURISÉ À DES PROFILS**
DYNAMISCHE ANPASSUNG EINER AUSFÜHRUNGSUMGEBUNG EINES SICHEREN ELEMENTS AN PROFILE
DYNAMIC ADAPTION OF A SECURE ELEMENT EXECUTION ENVIRONMENT TO PROFILES

(30) Priorité: 26.07.2019 FR 1908501
(43) Date de publication de la demande: 01.06.2022
(73) Titulaire: IDEMIA France, 92400 Courbevoie (FR)
(72) Inventeur: DEL GIUDICE, Lauren, 92400 COURBEVOIE (FR); CRICCO, Rémy, 92400 COURBEVOIE (FR); COURQUIN, Yannick, 92400 COURBEVOIE (FR)
(74) Mandataire: Barreau, Cédric
(86) Numéro de dépôt international: PCT/FR2020/051351
(87) Numéro de publication internationale: WO 2021/019162

(56) Documents cités:
- EP-A1- 3 606 119
- US-A1- 2018 249 322
- V4 NA ET AL: "SGP.02 -Remote Provisioning Architecture for Embedded UICC Technical Specification", 25 February 2019 (2019-02-25), https://www.gsma.com/esim/esim-m2m-specifications/, XP055678062, Retrieved from the Internet <URL:https://www.gsma.com/newsroom/wp-content/uploads/SGP.02-v4.0.pdf> [retrieved on 20200319]

## Description

### Domaine technique

La présente invention concerne, de façon générale, le domaine des éléments sécurisés et plus particulièrement la gestion de leur exécution dans de tels éléments.

### Technique antérieure

Un élément sécurisé, SE, est un composant ou plate-forme matérielle inviolable (typiquement une puce ou une carte à puce) utilisée dans un terminal hôte (typiquement un terminal mobile) et capable d'héberger, de façon sûre, des applications et des données en conformité avec des règles et des exigences de sécurité fixées par des autorités de confiance.

Un facteur de forme de plus en plus utilisé du SE est l'élément sécurisé embarqué, eSE (pour « embedded Secure Element »). Cet élément sécurisé embarqué est généralement soudé au terminal hôte. Un facteur de forme plus récent est l'élément sécurisé intégré, iSE (pour « integrated Secure Element »). L'élément sécurisé fait alors partie intégrante du processeur principal (par exemple comme cœur sécurisé en plus d'autres cœurs du processeur).

Les éléments sécurisés sont programmés selon les applications souhaitées.

A titre d'exemple, un eSE ou iSE peut former l'élément sécurisé nécessaire à de nombreux usages ou services reposant sur une communication NFC (Near Field Communication) mis en œuvre par un terminal mobile hôte. Par exemple, un service de paiement NFC nécessite des informations bancaires secrètes de l'utilisateur qui sont avantageusement stockées dans l'eSE, à l'abri de tout accès intempestif. C'est aussi le cas d'un service de transport public où l'eSE permet d'identifier l'utilisateur auprès de portiques.

Un autre exemple d'élément sécurisé est l'UICC embarquée (pour « Universal Integrated Circuit Card » soit carte de circuit intégré universelle) qui procure les références d'un abonné pour s'authentifier sur un ou plusieurs réseaux de téléphonie mobile, notamment via différents opérateurs. Il s'agit par exemple d'un eSE ou iSE configuré comme une carte SIM (pour « Subscriber Identity Module » - ou module d'identité d'abonné). On parle alors d'eUICC (pour « embedded UICC ») ou iUICC (pour « integrated UICC »).

L'intérêt principal de ces éléments sécurisés est d'offrir plusieurs services à l'aide d'un seul et même élément sécurisé. Plusieurs fournisseurs de service doivent donc charger les données et/ou applications dans le même élément sécurisé permettant à un utilisateur d'accéder à leurs services. Ces données et/ou applications propres à un fournisseur de service pour un utilisateur forment un profil de service mémorisé dans l'élément sécurisé. On connaît notamment les profils au sens de la norme GSMA RSP Technical Specification, Version 2.2 du 01 septembre 2017 (ci-dessous GSMA SGP.22) qui sont associés à des opérateurs mobiles (fournisseurs de service) et contiennent les informations de l'utilisateur lui permettant d'accéder à leurs services de téléphonie mobile. On connaît également les configurations au sens de la norme GlobalPlatform Card Specification (Version 2.3 d'octobre 2015) qui sont associées à des autorités (fournisseurs de service) et contiennent les informations de l'utilisateur lui permettant d'accéder à leurs services respectifs.

Chaque fournisseur de service présente ses propres spécificités qui nécessitent d'adapter l'environnement d'exécution dans l'élément sécurisé, par exemple un système d'exploitation et/ou une machine virtuelle (typiquement un système Java Card), pour pouvoir utiliser le profil de service correspondant. Or, ces adaptations d'une ou plusieurs ressources d'exécution ne sont pas nécessairement compatibles d'un profil à l'autre.

D'une façon générale, il serait bénéfique d'améliorer la gestion de l'exécution d'un élément sécurisé comportant un profil de service.

On connaît, de la publication US 2010/012732, l'utilisation de données correctives ou « patch » pour mettre à jour un module de carte à puce après initialisation de celui-ci. Il s'agit cependant de corriger des erreurs dans l'environnement d'exécution. Cette approche ne permet pas de gérer dynamiquement l'environnement d'exécution en fonction du ou des profils d'exécution. Le document EP 3 606 119 A1 (GIESECKE DEVRIENT MOBILE SECURITY GMBH [DE]) 5 février 2020 (2020-02-05) divulgue la sauvegarde et la restauration de profils sur la carte lors du changement de profil. L'utilisation d'un assistant de profil local (LPA), soit sur l'eUICC soit séparément sur le téléphone sauvegarde et restaure les données statiques (clés, règles et paramètres pour la connexion) et dynamiques identifiées pour tous les profils.

Lors de la désactivation du profil, ces données de profil sont envoyées au LPA. Ces données peuvent ensuite être restaurées en une seule fois. Le document US 2018/249322 A1 (KIM SUNG OH [KR] ET AL) 30 août 2018 (2018-08-30) divulgue une amélioration du standard, qui prévoit qu'un seul profil (ISD-P) puisse être activé à un moment donné. Ainsi, lors de l'utilisation d'un profil dans un pays, les profils d'autres pays ne peuvent normalement pas être utilisés. L'assistant de profil local (LPA) permet l'utilisation virtuelle de plusieurs profils en même temps (par multiplexage temporel).

Chaque application peut utiliser un profil différent, qui est commuté à la volée lorsque nécessaire. Tous les profils apparaissent alors comme activés aux applications.

La présente invention vise à remédier à ces inconvénients.

### Exposé de l'invention

L'invention est définie par les revendications indépendantes. Les revendications dépendantes donnant des exemples d'implémentation. L'invention concerne tout d'abord un élément sécurisé comprenant un environnement d'exécution initial, un premier profil de service, des données adaptatives (ou « adaptateur » ou « adapter » en terminologie anglaise) de l'environnement d'exécution initial en un environnement d'exécution adapté au premier profil de service, une routine adaptative configurée pour appliquer les données adaptatives à l'environnement d'exécution initial, caractérisé en ce qu'il comprend en outre des données adaptatives inverses (ou adaptateur inverse) pour restaurer l'environnement d'exécution initial depuis l'environnement d'exécution adapté, la routine adaptative étant configurée pour appliquer les données adaptatives inverses après utilisation du premier profil de service.

Corrélativement, l'invention concerne également un procédé d'exécution dans un élément sécurisé comprenant un environnement d'exécution initial et un premier profil de service, le procédé comprenant les étapes suivantes :
- appliquer, par une routine adaptative, des données adaptatives de l'environnement d'exécution initial pour obtenir un environnement d'exécution adapté au premier profil de service,
- utiliser le premier profil de service dans l'environnement d'exécution adapté,
- puis appliquer, par la routine adaptative, des données adaptatives inverses à l'environnement d'exécution adapté pour restaurer l'environnement d'exécution initial.

A titre d'exemple, l'adaptation peut concerner une classe Java souvent utilisée dans un élément sécurisé conçu selon la technologie Java Card. Dans ce cas, les données adaptatives sont configurées pour adapter une classe Java initiale de l'environnement d'exécution initial à un format d'un objet instanciant la classe Java dans le premier profil de service, et les données adaptatives inverses sont configurées pour restaurer la classe Java initiale depuis la classe Java adaptée. Bien entendu, d'autres ressources d'exécution, telle que des applications chargées dans l'élément sécurisé, peuvent être adaptées.

Le principe d'adaptation de la présente invention s'applique aussi dans la situation où des objets de la classe ont déjà été instanciés par d'autres profils.

La présente invention permet ainsi d'adapter dynamiquement l'environnement d'exécution d'un élément sécurisé à différents profils chargés qui ont leurs propres spécificités. Avantageusement, le mécanisme d'adaptation proposé n'impacte pas les infrastructures déjà existantes (notamment des réseaux de téléphonie mobile) tout en augmentant le champ accessible aux fournisseurs de service pour adapter l'environnement d'exécution à leurs services. Il en résulte une plus grande liberté pour ceux-ci à offrir de nouvelles fonctionnalités ou nouveaux services.

Des caractéristiques optionnelles de modes de réalisation de l'invention sont définies dans les revendications dépendantes.

Dans un mode de réalisation, la routine adaptative est configurée pour appliquer les données adaptatives et les données adaptatives inverses en fonction du cycle de vie du premier profil de service. Cette approche offre une adaptation dynamique efficace de l'environnement d'exécution.

Par exemple, la routine adaptative est configurée pour appliquer les données adaptatives à l'environnement d'exécution initial lors d'une activation du premier profil de service et pour appliquer les données adaptatives inverses à l'environnement d'exécution adapté lors d'une désactivation ou suppression du premier profil de service. Cette disposition assure un fonctionnement optimal des profils activés.

Corrélativement pour le procédé selon l'invention, les données adaptatives et les données adaptatives inverses sont appliquées en fonction du cycle de vie du premier profil de service, par exemple, les données adaptatives sont appliquées à l'environnement d'exécution initial lors d'une activation du premier profil de service et les données adaptatives inverses sont appliquées à l'environnement d'exécution adapté lors d'une désactivation ou suppression du premier profil de service.

Dans un mode de réalisation, les données adaptatives et les données adaptatives inverses sont stockées sous forme de listes de directives interprétables par la routine adaptative. Cette disposition accroît les possibilités d'adaptation de l'environnement d'exécution comparativement aux techniques connues limités à un nombre restreint d'indirections (vers un système d'exploitation) où une modification peut être apportée. Les applications et fonctionnalités des profils peuvent par conséquent être plus variées.

Dans un mode de réalisation, les données adaptatives et les données adaptatives inverses sont stockées dans le premier profil de service ou associées à ce premier profil de service, par exemple dans une mémoire réservée au premier profil. Aussi, chaque profil stocke ses propres données adaptatives. Cela facilite l'utilisation et la gestion des données adaptatives pour leur application lorsque le profil est par exemple activé.

Dans un mode de réalisation, l'élément sécurisé comprend un moyen de communication pour recevoir les données adaptatives et les données adaptatives inverses au sein d'un package transmis par un équipement externe, par exemple un package d'installation du premier profil de service transmis par un équipement d'un site de personnalisation ou par un serveur réseau distant, ou encore un package transmis par un serveur réseau distant postérieurement à l'installation du premier profil de service dans l'élément sécurisé. Notamment, les données adaptatives et les données adaptatives inverses peuvent être encapsulées comme deux composants supplémentaires (appelés custom component dans la technologie Java Card) d'une application du premier profil au sein du package. Aucune adaptation des mécanismes existants d'installation (provisionning selon les normes) n'est ainsi requis.

Corrélativement pour le procédé selon l'invention, celui-ci comprend en outre la réception des données adaptatives et des données adaptatives inverses au sein d'un package transmis par un équipement externe, par exemple un package d'installation du premier profil de service transmis par un équipement d'un site de personnalisation ou par un serveur réseau distant, ou encore un package transmis par un serveur réseau distant postérieurement à l'installation du premier profil de service dans l'élément sécurisé.

Dans une variante, l'élément sécurisé comprend un module de génération des données adaptatives inverses à partir des données adaptatives reçues d'un équipement réseau distant. Les données adaptatives peuvent être reçues comme composant supplémentaire d'une application du premier profil dans un package d'installation de ce profil. La génération par l'élément sécurisé des données adaptatives inverses permet de réduire les risques d'erreur dans leur génération. Dans cette variante, la génération peut désormais tenir compte du résultat réellement obtenu en appliquant les données adaptatives à l'environnement d'exécution de l'élément sécurisé (compte tenu par exemple de la plateforme matérielle utilisée), ce que ne peut pas un serveur distant. Cette génération a lieu lors de l'adaptation de l'environnement d'exécution.

Dans une variante, cette génération peut avoir lieu à l'installation du profil ou à la première activation du profil.

Corrélativement pour le procédé selon l'invention, celui-ci comprend en outre la génération, par l'élément sécurisé, des données adaptatives inverses à partir des données adaptatives reçues d'un équipement réseau distant.

Dans un mode de réalisation, l'élément sécurisé comprend en outre un deuxième profil (ou plus) choisi parmi :
- un profil de service utilisable dans l'environnement d'exécution initial,
- un profil de service utilisable dans un environnement d'exécution modifié obtenu par l'application d'autres données adaptatives différentes desdites données adaptatives à l'environnement d'exécution initial, ce profil de service comportant les autres données adaptatives et des autres données adaptatives inverses pour restaurer l'environnement d'exécution initial depuis l'environnement d'exécution modifié.

L'application des données adaptatives et données adaptatives inverses de différents profils peut alors être effectuée selon leurs cycles de vie, c'est-à-dire au fur et à mesure de leurs activations, désactivations, suppressions.

Dans un mode de réalisation, l'élément sécurisé comprend un collecteur de déchets (ou « ramasse-miettes » ou « garbage collector » selon une terminologie anglo-saxonne) collectant des ressources de profil (par exemple des objets, typiquement Java) non utilisées (par exemple non référencées par les applications) stockées en mémoire, le collecteur de déchets étant configuré pour effectuer la collecte uniquement parmi les ressources de profil liées à un ou plusieurs profils de service particuliers. La collecte est généralement effectuée en vue d'une suppression des ressources non utilisées, pour libérer de l'espace mémoire. Le comportement du garbage collector est ainsi adapté au type d'objet à collecter, à savoir fonction du ou des profils visés. Il est ainsi possible de ne venir collecter qu'un type d'objet.

Le ou les profils de service particulier peuvent être constitués d'un seul profil désigné par une action ou commande comme décrit ci-après, ou être un ensemble de profils s'exécutant sur le même environnement d'exécution adapté (c'est-à-dire des profils dont les données adaptatives correspondantes sont identiques). A titre illustratif, lorsqu'un profil cible est identifié pour collecte par le garbage collector, ce dernier peut étendre la collecte à l'ensemble des profils partageant le même environnement d'exécution adapté que celui du profil cible.

Selon une caractéristique, le profil de service particulier est un profil de service actif dans l'élément sécurisé. La collecte est ainsi effectuée pour le profil actif, par exemple en réponse à une commande de désactivation du profil actif.

Selon une variante, le profil de service particulier est le dernier profil de service actif. Cette disposition peut être utilisée lors d'une procédure de nettoyage de la mémoire alors qu'aucun profil n'est actif.

Selon une autre variante, le profil de service particulier est un profil de service à supprimer. Cette situation survient donc généralement en réponse à une commande de suppression d'un profil.

Dans ces deux variantes, l'environnement d'exécution n'est pas adapté au profil visé par la collecte. Aussi, l'élément sécurisé peut être configuré pour appliquer, avant d'effectuer la collecte, les données adaptatives associées au profil de service particulier (pour adapter l'environnement d'exécution au profil), et appliquer, après la collecte, les données adaptatives inverses associées au profil de service particulier (pour restaurer l'environnement d'exécution initial). Cela permet de réaliser une collecte efficace ciblée sur les objets spécifiques au profil concerné. Dans un mode de réalisation propre à la collecte pour un profil à supprimer, le collecteur de déchets collecte, lors de ladite collecte, les ressources de profil du profil de service à supprimer à l'exception des données adaptatives inverses associées à ce profil de service, et supprime les données adaptatives inverses seulement après les avoir appliquées. Cette disposition garantit un retour à l'environnement d'exécution générique lors de la suppression d'un profil. L'élément sécurisé peut ainsi continuer à être utilisé avec les profils restants.

Dans un mode de réalisation particulier, les ressources de profil sont estampillées d'un indicateur représentatif de leurs profils d'exécution respectifs. Cette disposition permet au collecteur de déchets de chercher efficacement parmi les ressources pertinentes.

Dans un mode de réalisation particulier, les ressources de profils peuvent être collectées spontanément, c'est-à-dire indépendamment de la réception d'une commande (par exemple de suppression ou de désactivation). A titre d'exemple, la collecte peut être déclenchée en cas de détection d'une saturation mémoire.

Dans ce cas notamment mais non exclusivement, le collecteur de déchets peut être configuré pour scanner, c'est-à-dire, et tel que bien connu par l'homme du métier, lire toutes les références d'un objet, l'ensemble des objets de tous les profils et ainsi procéder à la collecte sur l'ensemble des objets de tous les profils. Cette « vision » globale du collecteur de déchets apporte une précision accrue, au sens de pouvoir collecter tous les objets inatteignables, du fait d'avoir la possibilité de nettoyer toute la mémoire.

Préférablement, la collecte n'est opérée que pour les objets du profil actif afin de se focaliser sur le seul contexte courant. D'autres choix de mise en oeuvre sont néanmoins envisageables selon les performances souhaitées (précision de la collecte, au sens meilleur nettoyage de la mémoire, ou temps de traitement réduit).

L'invention concerne également un produit programme d'ordinateur comprenant des instructions configurées pour une mise en oeuvre des étapes du procédé ci-dessus lorsque ledit programme est exécuté sur un ordinateur, ainsi qu'un support tangible comprenant un tel produit programme d'ordinateur.

### Brève description des dessins

D'autres particularités et avantages de l'invention apparaîtront encore dans la description ci-après, illustrée par les figures ci-jointes qui en illustrent des exemples de réalisation dépourvus de tout caractère limitatif.
La **Figure 1** illustre un système dans lequel un élément sécurisé selon l'invention est mis en œuvre.
La **Figure 2** illustre un exemple d'architecture haut-niveau d'une carte eUICC 10 pour une mise en œuvre de l'invention.
La **Figure 3** illustre, à l'aide d'un ordinogramme, des étapes générales pour le déploiement d'adaptateurs selon l'invention dans un élément sécurisé.
La **Figure 4** illustre un exemple d'adaptation d'une classe Java selon un mode de réalisation de l'invention.
La **Figure 5** illustre, à l'aide d'un ordinogramme, des étapes générales de l'adaptation d'un environnement d'exécution lors de l'activation d'un profil, selon un mode de réalisation de l'invention.
La **Figure 6** illustre, à l'aide d'un ordinogramme, des étapes générales de la restauration d'un environnement d'exécution lors de la désactivation d'un profil, selon un mode de réalisation de l'invention.
La **Figure 7** illustre, à l'aide d'un ordinogramme, des étapes générales de l'adaptation dynamique d'un environnement d'exécution lors de la suppression d'un profil, selon un mode de réalisation de l'invention.

### Description détaillée

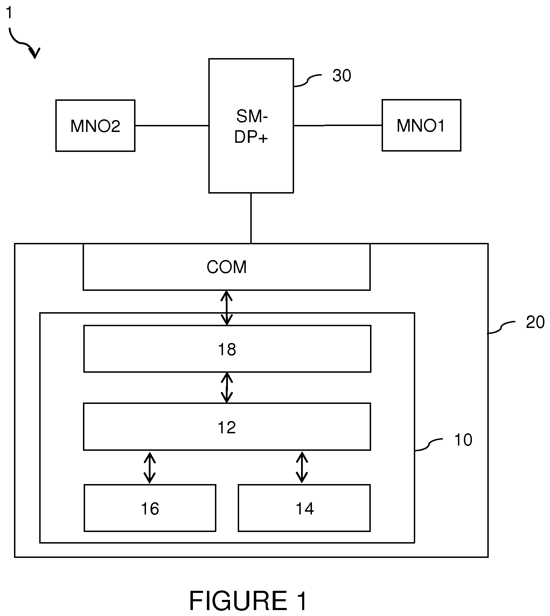

La **Figure 1** illustre un système 1 dans lequel un élément sécurisé 10 selon l'invention est mise en oeuvre. A titre illustratif, le système 1 représenté est un système de téléphonie mobile, bien que l'invention s'applique à tout système utilisant un élément sécurisé 10 contenant un ou plusieurs profils d'exécution.

Dans cet exemple, l'élément sécurisé 10 est une eUICC embarquée dans un équipement hôte 20 classique, de type téléphone mobile.

L'élément sécurisé 10 peut être tout type de module de carte à souder ou à insérer de façon amovible dans un lecteur d'élément sécurisé ou le dispositif hôte 20, dont des exemples sont un eSE, un iSE, une eSIM (pour embedded SIM), une SSP (pour Smart Secure Platform dont des exemples sont l'iSIM (pour integrated SIM) ou l'ieUICC (pour integrated eUICC)). L'équipement hôte 20 peut être l'un quelconque parmi un téléphone mobile (par exemple téléphone cellulaire ou intelligent), un ordinateur (par exemple un ordinateur portable), une tablette, un appareil de communication portable, un appareil informatique portable (par exemple un assistant de données personnelles), un appareil de divertissement (par exemple un appareil de musique ou vidéo, ou une radio satellite), ou tout autre appareil approprié.

Dans l'exemple de la **Figure 1****,** le téléphone 20 est relié à un serveur SM-DP+ 30 (« Subscription Manager Data Preparation » ou serveur de préparation de données et de gestion des abonnements) d'un réseau mobile, lequel serveur reçoit des données de différents opérateurs MNO1 et MNO2 pour les transmettre aux abonnés. Selon les situations de mise en oeuvre de l'invention, le terminal hôte 20 peut être connecté à différents types de serveurs distants 30. Le serveur SM-DP+ peut notamment être remplacé par deux serveurs SM-DP et SM-SR.

L'eUICC 10 (ou plus généralement l'élément sécurisé) comporte :
- une unité de traitement 12 - ou microprocesseur ;
- une ou plusieurs mémoires non volatiles 14 par exemple ROM (acronyme de « Read Only Memory » en terminologie anglo-saxonne), Flash, EEPROM (acronyme de « Electrically Erasable Read Only Memory » en terminologie anglo-saxonne) ou tout type de disque dur ;
- une mémoire vive 16 ou mémoire cache ou mémoire volatile par exemple RAM (acronyme de « Random Access Memory » en terminologie anglo-saxonne) comprenant des registres adaptés à l'enregistrement de variables et paramètres pendant le fonctionnement de l'eUICC 10 du terminal 20 ; lors de la mise en oeuvre de l'invention, les codes d'instructions de programme stockés en mémoire morte non-volatile sont chargés en mémoire RAM en vue d'être exécutés par l'unité de traitement 12 ;
- une ou plusieurs interfaces de communication 18 adaptées à échanger (transmettre et recevoir) des données avec le terminal hôte 20 et/ou avec le serveur distant 30 via un réseau de télécommunications et une interface de communication COM du terminal hôte 20.

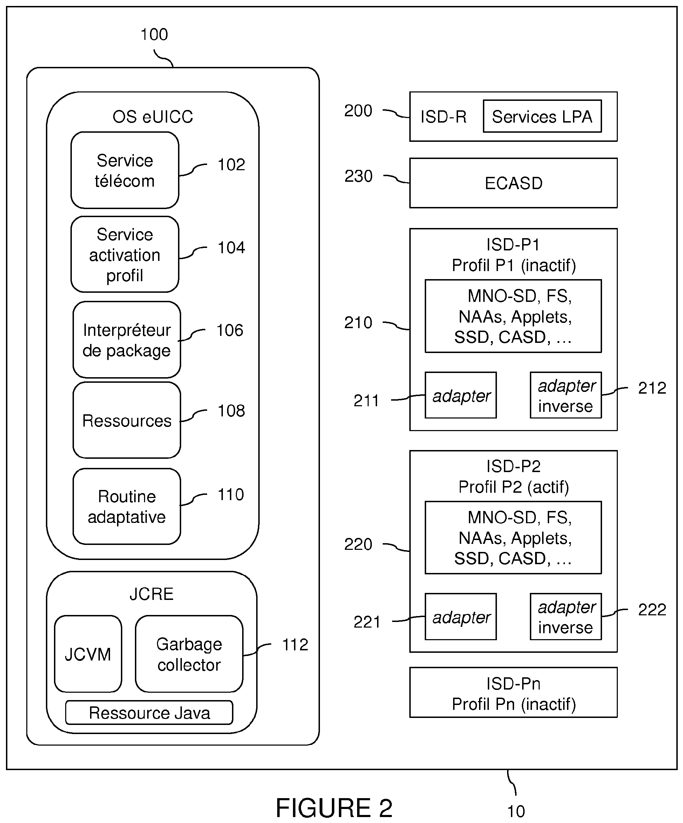

La **Figure 2** illustre un exemple d'architecture haut-niveau d'une eUICC 10 (de façon générale un élément sécurisé) dans une utilisation de téléphonie mobile où elle héberge plusieurs profils opérateurs MNO1, MNO2 permettant l'accès au réseau mobile de ces opérateurs (de façon générale elle héberge un ou plusieurs profils d'exécution permettant d'accéder à des services respectifs).

L'eUICC 10 comprend un environnement d'exécution 100, un domaine de sécurité racine ISD-R 200, un ou plusieurs (ici deux) domaines de sécurité de profil ISD-P 210, 220 correspondant à deux profils P1 et P2, et un domaine ECASD 230.

L'environnement d'exécution 100 comprend par exemple le système d'exploitation OS de l'eUICC 10. L'environnement d'exécution 100 peut également comprendre un environnement d'exécution JCRE (comprenant généralement une machine virtuelle JCVM) exécuté par l'OS lorsque l'eUICC 10 est conçue en accord avec la technologie Java Card.

L'environnement d'exécution 100 comporte un service télécom 102, un service d'activation de profil 104, un interpréteur de package de profil 106, une ou plusieurs ressources 108 utilisées par les profils installés (par exemple par des applications), une routine adaptative 110, et un collecteur de déchets 112.

Le service télécom 102 fournit des algorithmes d'authentification réseau pour les profils (P1, P2) stockés sur l'eUICC 10. Le service d'activation de profil 104 valide et applique des règles de politique de profil. L'interpréteur 106 traduit des packages de profil (typiquement au format CAP) reçus en des profils (par exemple P1 et P2) installés sur l'eUICC 10.

Les ressources 108 utilisées par les profils peuvent être de natures variées : données, applications, code (interprété ou natif), API (interface de programmation applicative), fonctions, classes (ajout, suppression, modification de champs d'une classe). Ces ressources 108 sont « adaptées » à l'aide de données adaptatives (ci-après « adaptateur ») dans une mise en œuvre l'invention. Dans l'exemple qui suit, on considère comme ressource « adaptable » une classe Java Card utilisée par les profils P1 et P2. Néanmoins, l'invention s'applique à l'adaptation de toute ressource.

La routine adaptative 110 permet d'appliquer des données adaptatives à ces ressources 108 afin d'obtenir des ressources adaptées. En appliquant des données adaptatives prévues pour un profil particulier (donc adaptées à un opérateur), il est ainsi possible d'adapter l'environnement d'exécution 100 au profil considéré, permettant d'assurer et supporter les fonctionnalités spécifiques prévues dans ce profil. De façon avantageuse, l'adaptation peut être réalisée sur le code natif de l'environnement d'exécution. En variante, l'adaptation peut être réalisée sur du code interprétable de l'environnement d'exécution.

L'exemple proposé ci-après s'appuie sur l'adaptation de la classe 108 aux différents profils, par exemple par ajout/modification d'un champ ou d'une méthode de la classe 108. Bien entendu, plusieurs ressources peuvent être adaptées, qui diffèrent d'un profil à l'autre. En outre, d'autres ressources que des classes Java peuvent être modifiées, par exemple le code ou les données d'une application chargée de l'environnement d'exécution 100.

Selon l'invention, la routine adaptative 110 permet également d'appliquer des données adaptatives inverses permettant de restaurer la ressource 108 dans son état initial. Ainsi, il est possible d'adapter dynamiquement l'environnement d'exécution 100 à un profil particulier à utiliser : en appliquant les données adaptatives idoines pour obtenir les ressources adaptées utilisées par le profil, puis en appliquant, en fin d'utilisation, les données adaptatives inverses pour restaurer les ressources initiales.

Le collecteur de déchets 112, autrement connu sous l'appellation de « garbage collector » dans un environnement Java, permet de collecter des ressources propres aux profils qui ne sont plus en cours d'utilisation, pour les supprimer (afin de libérer de la mémoire). Il s'agit par exemple de collecter des objets Java qui ne sont plus atteignables par les méthodes et autres objets mis en oeuvre.

De façon connue, l'ISD-R 200 permet la création des domaines de sécurité de profil ISD-P 210, 220 ainsi que la gestion de leurs cycles de vie, c'est-à-dire l'installation des profils P1 et P2, leurs activations, désactivations et suppressions. Des commandes peuvent ainsi être reçues par l'ISD-R 200 du serveur distant 30 ou d'une action (par exemple saisie, choix, clic, ...) réalisée par l'utilisateur sur le terminal hôte 20, aux fins de modifier l'état d'un profil.

Pour le cas où deux profils d'exécution ne peuvent être actifs en même temps, l'activation d'un profil inactif est interprétée également comme une demande de désactivation du profil actif. En variante, deux profils peuvent être actifs simultanément, reposant sur un même environnement d'exécution (éventuellement adapté) ou sur des environnements d'exécution différents auquel cas l'environnement d'exécution est dynamiquement adapté en temps réel au profil sollicitant une exécution.

Chaque domaine de sécurité de profil ISD-P 210 ou 220 correspond à un profil P1 ou P2 pour accéder au réseau mobile d'un opérateur MNO1 ou MNO2. De façon connue, un ISD-P comporte un certain nombre d'éléments (non représentés) tels qu'un MNO-SD (domaine de sécurité de l'opérateur contenant des clés cryptographiques), des domaines de sécurité supplémentaires (SSD), un domaine d'autorité de contrôle (CASD), des applications (applets), un application d'accès réseau (NAA) utilisée pour permettre l'accès au réseau de l'opérateur à l'aide des clés du MNO-SD, des données de profil (incluant des règles de politique de profil).

Chaque domaine de sécurité de profil ISD-P 210 ou 220 (ou profil P1 ou P2) comporte en outre un adaptateur 211/221 ainsi qu'un adaptateur inverse 212/222.

L'adaptateur 211/221 permet d'adapter l'environnement d'exécution initial (ou d'origine) 100 en un environnement d'exécution adapté aux spécificités du profil P1 ou P2 (et donc de l'opérateur associé). L'adaptateur 211/221 correspond à la différence binaire entre l'environnement d'exécution initial 100 et l'environnement d'exécution adapté aux spécificités de l'opérateur. L'adaptation peut concerner une ou plusieurs ressources d'exécution 108.

L'adaptateur inverse 212/222 permet de restaurer l'environnement d'exécution initial 100 depuis l'environnement d'exécution adapté par l'adaptateur 211/221. En d'autres termes, l'adaptateur inverse 212/222 correspond ainsi à la différence binaire entre l'environnement d'exécution adapté aux spécificités de l'opérateur et l'environnement d'exécution initial 100 non adapté. La restauration peut concerner la ou les ressources d'exécution 108 adaptées.

Les adaptateurs sont encapsulés dans des directives interprétables par la routine adaptative 110, c'est-à-dire sous forme d'applications. Deux listes de directives (correspondant aux adaptateur et adaptateur inverse) peuvent ainsi être stockées dans chaque profil, en tant qu'objets. Ces objets peuvent ainsi être aisément reconnus par la routine adaptative 110 comme adaptateurs à exécuter. Leur format (directives interprétables) permet avantageusement de s'affranchir des schémas restrictifs de l'art antérieur où seules des indirections (liste de certaines adresses) sont proposées pour une éventuelle correction.

Bien que les profils représentés sur la figure aient chacun un adaptateur et un adaptateur inverse, un ou plusieurs profils installés sur l'élément sécurisé 10 peuvent n'avoir aucun adaptateur, notamment s'ils ne nécessitent (pour leur utilisation) aucune adaptation de l'environnement d'exécution 100 et de ses ressources d'exécution 108.

Dans l'exemple, un profil (ici P1) est désactivé lorsqu'un autre profil (ici P2) est activé. D'autres profils peuvent être prévus, préférablement désactivés pour le cas où un seul profil est actif à la fois au sein de l'élément sécurisé 10.

Le domaine ECASD 230 est responsable de la sécurisation des domaines de sécurité 200, 210, 220 et des fonctions d'authentification de l'eUICC 10, en stockant les clés et autres certificats associés aux domaines de sécurité.

Grâce aux adaptateur et adaptateur inverse selon l'invention, l'environnement d'exécution 100 peut être adapté dynamiquement à un profil particulier à utiliser, sans contrainte pour l'opérateur du profil. Il peut en particulier être adapté dynamiquement lors de changements de profils, c'est-à-dire en fonction du cycle de vie des différents profils stockés dans l'élément sécurisé 10.

Tout type de ressource d'exécution 108 peut être adaptée dynamiquement, contrairement aux techniques connues généralement limitées uniquement à la modification de certaines ressources prédéterminées (généralement une liste d'indirections possibles sur ces ressources).

Une gestion appropriée des adaptateurs comme décrite par la suite (utilisant notamment les adaptateurs inverses pour restaurer l'environnement d'exécution) permet ainsi de faire cohabiter, au sein d'un même élément sécurisé 10, des profils qui sont potentiellement incompatibles entre eux.

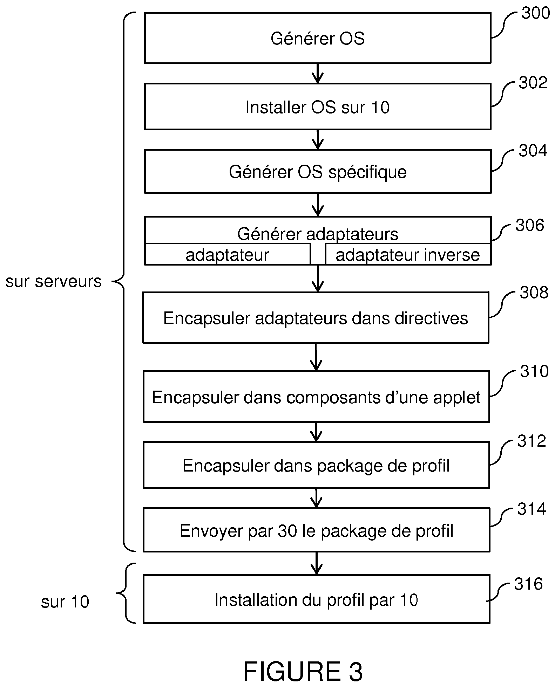

La **Figure 3** illustre, à l'aide d'un ordinogramme, des étapes générales pour le déploiement des adaptateurs 211, 221 et adaptateurs inverses 212, 222 dans un élément sécurisé 10.

De façon préalable, un environnement d'exécution initial 100 (par exemple un système d'exploitation OS et/ou un système Java Card avec machine virtuelle Java Card) est généré (étape 300) pour installation sur l'élément sécurisé 10 (étape 302) selon des techniques classiques. Par exemple, l'installation de l'environnement d'exécution 100 peut être réalisée, en usine, lors de la fabrication, pré-personnalisation ou personnalisation de l'élément sécurisé 10. En variante, elle peut être effectuée à distance par OTA (OTA pour over-the-air - voir par exemple les standards GSMA SGP 22 RSP - Technical Specification - Version 2.2.1 du 18 Décembre 2018, GSMA SGP .02 - Remote Provisioning Architecture for Embedded UICC - Technical Specification - Version 4.0 du 25 Février 2019, GlobalPlatform Card - Remote Application Management over HTTP - Card Specification v2.2 - Amendment B - version 1.1.3 ) via le serveur distant 30, par exemple lors d'une mise à jour de l'OS ou de la machine virtuelle Java Card.

A tout instant, un fournisseur de service (un opérateur mobile dans l'exemple qui suit) peut souhaiter installer un profil de service (un profil abonné mobile P2 dans l'exemple qui suit, mais pouvant également être un profil bancaire lié à un service bancaire, un profil transport lié à un service de transport, etc.) dans l'élément sécurisé 10. Les étapes 304 et suivantes sont donc réalisées autant de fois qu'il y a de profils à installer, lorsque ceux-ci requièrent une adaptation de l'environnement d'exécution 100.

Pour tenir compte des spécificités propres au service fourni, l'opérateur génère (étape 304) un environnement d'exécution spécifique à ce service. On dénomme ci-après cet environnement d'exécution spécifique « l'environnement d'exécution adapté au profil P2 ». Cette étape peut partir de l'environnement d'exécution 100 initial tel que créé à l'étape 300.

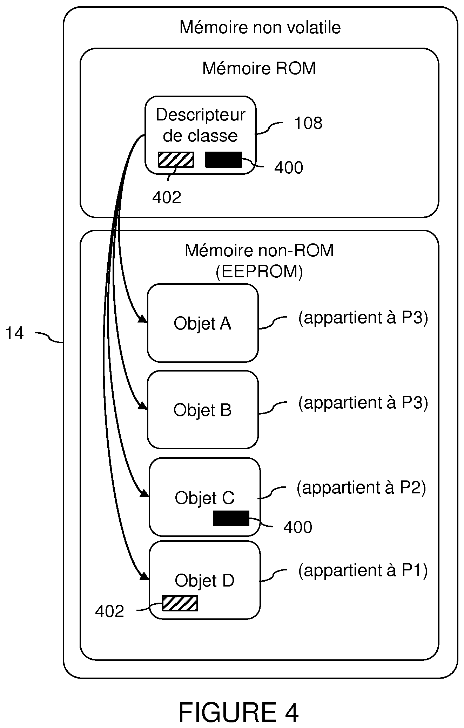

La **Figure 4** illustre un exemple d'adaptation d'une ressource d'exécution 108 basée sur la technologie Java, par exemple Java Card.

La ressource d'exécution 108 est ici un descripteur de classe Java tel que connu dans l'art antérieur, comprenant par exemple des interfaces, des champs, des méthodes et/ou des attributs. La classe Java peut être instanciée en objets utilisés par les profils. Dans l'exemple, les objets A et B sont deux instances de la classe 108 telle que prévue dans l'environnement d'exécution initial 100 (i.e. créé à l'étape 300). Les objets A et B ont été créés pour le profil P3, qui implémentent par exemple une méthode de la classe définie dans l'environnement d'exécution initial 100.

Dans l'environnement d'exécution spécifique au profil P2, le descripteur de classe Java est modifié pour par exemple comprendre une ou plusieurs interfaces, champs, méthodes et/ou attributs modifiés qui correspondent aux spécificités du service de l'opérateur MNO2 du profil P2. Par exemple, une méthode différente (que celle prévue dans la classe 108) peut être nécessaire pour réaliser une opération du service de l'opérateur MNO2. Une instanciation de cette classe modifiée ou « adaptée » est réalisée au travers de l'objet C, créé pour le profil P2. L'objet C comporte ainsi par exemple la méthode modifiée 400.

De même dans l'environnement d'exécution spécifique au profil P1, le descripteur de classe Java est modifié aux spécificités du service de l'opérateur MNO1 du profil P1. L'objet D instancié pour ce profil comporte ainsi par exemple la méthode modifiée 402.

De retour à la **Figure 3****,** à l'étape 306, les adaptateur 221 et adaptateur inverse 222 spécifiques au profil P2 considéré sont générés. Chaque adaptateur peut notamment être la différence binaire entre les deux environnement d'exécution générés aux étapes 300 et 304 : l'adaptateur 221, la différence entre l'environnement d'exécution initial 100 et l'environnement d'exécution spécifique (ou adapté) de l'étape 304 et l'adaptateur inverse 222, la différence entre l'environnement d'exécution spécifique de l'étape 304 et l'environnement d'exécution initial 100.

Dans le cas de la **Figure 4****,** les adaptateur 221 et adaptateur inverse 222 pour le profil P2 comportent la définition additive des composants supplémentaires 400 (pour l'adaptateur 221) et la définition soustractive des composants supplémentaires 400 (pour l'adaptateur inverse 222), respectivement.

A l'étape 308 de la **Figure 3****,** les adaptateurs générés 221, 222 sont encapsulés dans des directives interprétables par la routine adaptative 110 de l'environnement d'exécution 100. Ces directives sont elles-mêmes encapsulées à l'étape 310 dans une application, typiquement une applet Java Card type fichier CAP, en tant que deux composants supplémentaires (« custom components » dans la spécification Java Card). L'application peut être marquée, par exemple à l'aide d'un entête prédéfini, comme contenant les adaptateurs.

A l'étape 312, cette application est ajoutée dans un package du profil P2, ce package (Profile Package selon certains normes SIM Alliance) ayant vocation à être déployé dans l'élément sécurisé 10 sur le terrain. La création d'un package de profil pour son installation dans un élément sécurisé et l'ajout d'applications dans celui-ci sont connus de l'homme de l'art. Par exemple, le package peut être généré conformément au document « SIMalliance eUICC Profile Package Interoperable Format Technical Specification », Version 2.2.

Puis le package est envoyé, via le serveur distant 30, à l'élément sécurisé 10, lors de l'étape 314.

L'étape suivante 316 prend place dans l'élément sécurisé 10 recevant le package envoyé au sein duquel se trouvent les adaptateurs. De façon connue, l'élément sécurisé 10 procède à l'installation du profil P2 à l'aide du package reçu. Une procédure de chargement et installation d'un profil est par exemple décrite dans le document « GSMA SGP .22 - RSP Technical Specification », Version 2.1 du 27 février 2017.

Lors de l'installation, l'environnement d'exécution reconnait le marquage de l'applet des adaptateurs. Il peut ainsi traiter cette applet pour en extraire les directives interprétables (représentant chacun des adaptateurs 221 et 222) et les stocker en lien avec le profil P2, par exemple dans l'ISD-P2 formant ce profil. En d'autres termes, les adaptateur 221 et adaptateur inverse 222 sont stockés dans la mémoire réservée au profil P2 dans l'élément sécurisé 10.

Dans une variante de réalisation, seul l'adaptateur 221 de l'environnement d'exécution initial 100 est généré à l'étape 306. Dans cette variante, l'adaptateur inverse 222 peut être généré (et installé) par l'élément sécurisé 10 par exemple lors de l'installation de l'adaptateur 221 (étape 316) ou lors de la première utilisation/application de l'adaptateur 221. Dans ce cas, c'est l'élément sécurisé 10 (et non plus un équipement à l'usine ou un serveur distant) qui obtient l'environnement d'exécution spécifique (adapté) en appliquant l'adaptateur reçu à l'environnement d'exécution initial 100, puis détermine la différence binaire entre cet environnement d'exécution spécifique et l'environnement d'exécution initial 100 pour construire l'adaptateur inverse.

Bien que la **Figure 3** soit décrite en lien avec un package d'installation du profil P2 dans l'élément sécurisé, le même mécanisme peut être mis en oeuvre avec un package de mise à jour du profil P2.

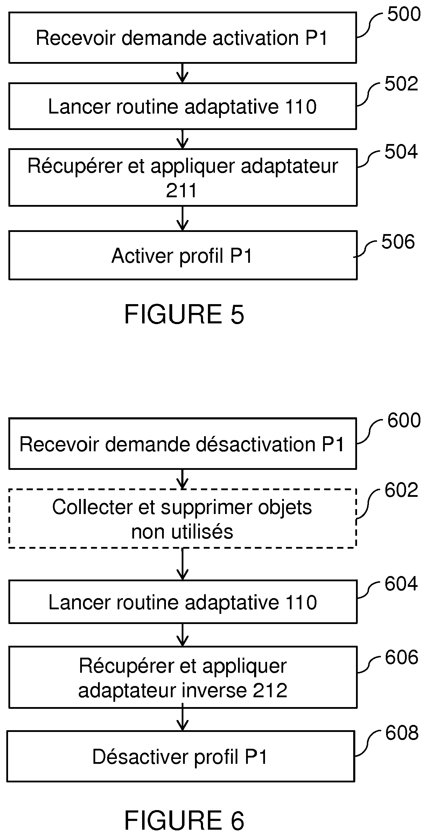

Les Figures 5à 7 illustrent, à l'aide de logigrammes, l'utilisation des adaptateurs et adaptateurs inverses en fonction de l'activation, désactivation et suppression des profils associés. Ces figures illustrent ainsi comment les adaptateurs et les adaptateurs inverses sont appliqués en fonction du cycle de vie des profils.

Les **Figures 5** et **6** illustrent notamment l'application des adaptateurs à l'environnement d'exécution initial 100 lors d'une activation d'un des profils et l'application des adaptateurs inverses à l'environnement d'exécution adapté lors d'une désactivation ou suppression du profil. On obtient ainsi une adaptation dynamique et à la volée de l'environnement d'exécution aux différents profils successivement activés (puis désactivés), en appliquant successivement les étapes des **Figures 5** et **6****.**

Il peut y avoir autant d'adaptations possible de l'environnement d'exécution qu'il y a d'opérateurs (ou de profils). Dans l'exemple de la **Figure 4****,** la classe 108 est utilisée pour instancier les objets A et B lorsque le profil P3 est actif (l'environnement d'exécution n'étant pas adapté). Puis le profil P1 est activé (en lieu et place de P3), l'environnement d'exécution étant alors adapté en conséquence (avec l'adaptateur 211 ajoutant la méthode 402) et l'objet D est instancié à partir de la classe 108 modifiée avec la méthode 402 propre à P1. Puis le profil P2 est activé (en lieu et place de P1), conduisant à l'application de l'adaptateur inverse 212 de P1 (désactivation de P1) et à l'application de l'adaptateur 221 de P2 pour adapter l'environnement d'exécution à P2. L'objet C est alors instancié à partir de la classe 108 modifiée avec la méthode 400 propre à P2.

A l'étape 500, l'élément sécurisé 10, et plus précisément l'ISD-R 200, reçoit une commande d'activation d'un profil. Dans l'exemple de la **Figure 2****,** la commande peut demander l'activation du profil P1 inactif. Cette demande peut également être interprétée comme une commande de désactivation, au préalable, du profil actif, ici P2. Dans ce cas, le process de la **Figure 6** est exécuté pour la désactivation du profil P2 avant le process de la **Figure 5** pour l'activation du profil P1.

Des exemples de commande et de procédure d'activation (Profile Enabling) sont décrits dans les documents GSMA SGP.02 (« Remote Provisioning Architecture for Embedded UICC Technical Specification », Version 3.2 du 27 juin 2017) et GSMA SGP.22.

A l'étape 502, l'ISD-R 200 débute l'exécution de la commande d'activation de façon classique. Pendant cette exécution, l'ISD-R 200 appelle la routine adaptative 110 pour le compte de l'ISD-P1. A l'étape 504, la routine adaptative 110 récupère l'adaptateur 211 du profil P1 à activer (et non l'adaptateur inverse 212).

La nature de la commande (activation ou désactivation par exemple) permet à la routine adaptative 110 de récupérer soit l'adaptateur pour adapter l'environnement d'exécution initial (commande d'activation) soit l'adaptateur inverse pour le restaurer (commande de désactivation/suppression).

Le système d'exploitation de l'eUICC connaît en permanence l'état courant de l'environnement d'exécution, c'est-à-dire quel profil est actif, grâce à une valeur persistante mise en mémoire qui indique par exemple le cycle de vie des profils. Sur la base de cette information, la routine adaptative 110 peut donc récupérer l'adaptateur idoine : Ainsi, le système d'exploitation sait continuellement quel profil est couramment actif. S'il apparaît qu'aucun profil n'est actif et donc que l'environnement d'exécution n'est pas adapté, la routine adaptative 110 peut alors récupérer l'adaptateur du profil à activer en cas de commande d'activation. En revanche, s'il apparaît qu'un profil est couramment actif, la routine adaptative 110 peut récupérer l'adaptateur inverse du profil actif en cas de commande de désactivation ou suppression de ce profil.

Si aucun adaptateur n'est disponible (par exemple parce que le profil ne requiert pas d'adaptation de l'environnement d'exécution), le procédé passe directement à l'étape 506. En variante, un adaptateur par défaut peut être stocké avec la routine adaptative110 (avec un adaptateur inverse par défaut correspondant), lequel adaptateur par défaut est appliqué par la routine en l'absence d'adapter spécifique au profil à activer.

Toujours à l'étape 504, la routine adaptative 110 applique l'adaptateur 211 récupéré de sorte à adapter dynamiquement l'environnement d'exécution initial 100 au profil P1. Dans l'exemple de la **Figure 4****,** la classe 108 est adaptée pour contenir par exemple la méthode modifiée 400.

A l'étape 506, l'ISD-R 200 poursuit l'exécution de la commande d'activation de façon classique, aboutissant à l'activation du profil P1. Le registre mémorisant un identifiant du profil actif est mis à jour (mis à la valeur de l'identifiant de P1).

Le profil P1 peut ainsi être utilisé dans l'environnement d'exécution adapté. L'environnement d'exécution adapté fonctionne totalement selon les caractéristiques de l'adaptateur appliqué, garantissant que les fonctions ou données spécifiques à l'opérateur MNO1 sont disponibles.

Après utilisation, le profil P1 peut être désactivé (par exemple parce qu'un autre profil, P2 dans l'exemple, est activé) conformément à la **Figure 6****.** A l'étape 600, l'ISD-R 200 reçoit donc une commande de désactivation (Profile Disabling) du profil P1.

A l'étape 604, l'ISD-R 200 débute l'exécution de la commande de désactivation de façon classique. Pendant cette exécution, l'ISD-R 200 appelle la routine adaptative 110. Soit l'indication du profil (ici P1) à désactiver est indiquée dans la commande, soit la routine adaptative 110 peut utiliser le registre mémorisant un identifiant du profil actif. A l'étape 606, la routine adaptative 110 récupère l'adaptateur inverse 212 du profil P1 à désactiver. Si aucun adaptateur inverse n'est disponible (par exemple parce que l'environnement d'exécution n'a pas eu besoin d'être adapté au profil actif), le procédé passe directement à l'étape 608 ou, en variante, l'adaptateur inverse par défaut est récupéré.

Toujours à l'étape 606, la routine adaptative 110 applique l'adaptateur inverse 212 récupéré de sorte à restaurer l'environnement d'exécution initial 100. Dans l'exemple de la **Figure 4****,** la classe 108 est restaurée sans la méthode modifiée 400.

A l'étape 608, l'ISD-R 200 poursuit l'exécution de la commande d'activation de façon classique, aboutissant à la désactivation du profil P1. Le registre mémorisant un identifiant du profil actif est mis à jour (mis à 0).

Dans un mode de réalisation, il peut être bénéfique de supprimer, de la mémoire, des données du profil P1 à désactiver. C'est le cas par exemple des objets Java instanciés pendant l'utilisation du profil P1, afin de libérer de l'espace mémoire 14 qui peut être limité dans l'élément sécurisé 10.

Cette opération est menée par le garbage collector 112. Selon un mode de réalisation, celui-ci est configuré pour scanner uniquement les objets du profil actif en vue de la collecte. En effet, si un objet est issu d'une classe qui est adaptée pour un profil, la structure de cet objet n'est reconnue que si l'environnement d'exécution est adapté. En d'autres termes, le garbage collector 112 risque de ne pas reconnaitre la structure d'un objet appartenant au profil P si l'environnement d'exécution n'est pas adapté.

En outre, il faut veiller à limiter l'intervention du garbage collector 112 au seul profil courant afin d'éviter toute corruption (par suppression non souhaitée d'objets) d'un autre profil. Aussi, les objets auront été créés dans le JCRE en respectant, de préférence, un cloisonnement des profils les uns avec les autres, impliquant notamment qu'aucun objet d'un profil ne pointe vers un objet d'un autre profil. Cela permet un mécanisme de nettoyage (garbage collector) simplifié tout en améliorant également la sécurité au niveau des profils.

Le nettoyage est ainsi réalisé à l'étape optionnelle 602 précédant l'application de l'adaptateur inverse (étape 606) et consiste pour l'ISD-R 200 à lancer une exécution du garbage collector 112 pour le compte du profil actif (identifiant indiqué dans le commande de lancement ou récupéré du registre mémorisant l'identifiant du profil actif). Cette exécution comporte la collecte des objets instanciés (par exemple à partir de la classe 108 mais pas uniquement) pour le profil P1 uniquement (celui à désactiver) puis la suppression de ceux-ci. Le garbage collector 112 ne collecte pas ici d'éventuels objets instanciés pour d'autres profils ni au sein du JCRE.

Les objets instanciés pour le profil P1 peuvent être ceux stockés dans un espace mémoire réservé à l'ISD-P1.

En variante, les objets peuvent être instanciés par la machine virtuelle JCVM en les estampillant d'un marquage (ou indicateur) représentatif de leurs profils. Ainsi, le garbage collector 112 peut facilement identifier les objets liés au profil P1 à désactiver.

Selon une autre variante, une table de correspondance peut être maintenue à jour qui liste les objets créés pour chaque profil. Ainsi le garbage collector 112 peut rapidement identifier les objets liés au profil P1 à désactiver.

Selon une autre variante, un jeu d'indirections peut être mis en place qui indique les emplacements (adresses mémoire) où sont stockés les objets instanciés pour chaque profil.

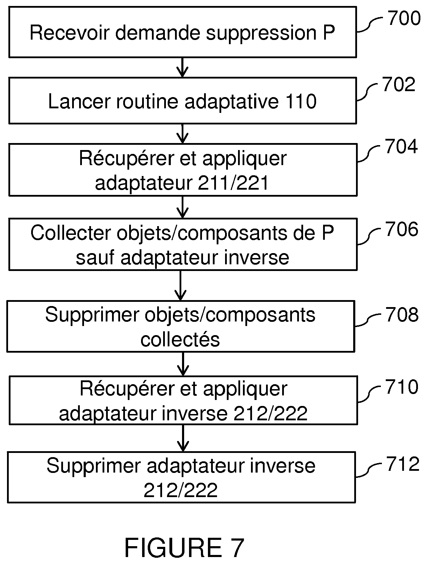

Bien que ce mécanisme de collecte par le garbage collector 112 soit présenté en lien avec la désactivation d'un profil, il peut également être mis en oeuvre lors de la suppression d'un profil comme décrit ci-dessous en lien avec la **Figure 7** : les objets appartenant au profil à supprimer sont collectés par la garbage collector puis supprimés.

Selon une autre variante, les objets créés peuvent être collectés à n'importe quel moment pour suppression, par exemple lors d'une saturation mémoire.

Dans cet exemple de la **Figure 5****,** l'adaptation est réalisée une seule fois lors de l'activation du profil P1. En variante, le profil P1 peut être activé de façon classique sans adaptation (à ce stade) de l'environnement d'exécution initial 100 et une adaptation à l'aide de l'adaptateur 211 peut être lancée (étapes 502 et 504) à l'occasion d'autres événements, par exemple à chaque accès au profil P1. Un accès au profil P1 peut avoir lieu lors d'une procédure d'authentification (d'un service réseau, bancaire ou transport par exemple) ou lors de l'appel à une application située dans le profil P1. Dans cette variante, l'environnement d'exécution initial 100 peut être restauré (en utilisant les étapes 602 à 606) à l'issue de ces opérations, e.g. de la procédure d'authentification ou de l'exécution de l'application située dans le profil P1.

La **Figure 7** illustre des étapes lors de la suppression d'un profil.

A l'étape 700, l'élément sécurisé 10, et plus précisément l'ISD-R 200, reçoit une commande de suppression (Profile Deletion) d'un profil P, par exemple conforme aux documents GSMA mentionnés plus haut.

Pour une utilisation efficace du garbage collector 112, l'environnement d'exécution est adapté au profil à supprimer. Ainsi, à l'étape 702, l'ISD-R 200 appelle la routine adaptative 110 pour le compte du profil à supprimer. A l'étape 704, la routine adaptative 110 récupère l'adaptateur 211 ou 221 du profil P à supprimer (et non l'adaptateur inverse 212 ou 222), puis l'applique de sorte à adapter l'environnement d'exécution initial 100 au profil P.

A l'étape 706 (similaire à l'étape 602 décrite plus haut), l'ISD-R 200 qui reprend la main lance une exécution du garbage collector 112 pour le compte du profil P à supprimer. Cette exécution comporte la collecte des objets instanciés (à partir d'une classe reconnue, possiblement adaptée) pour le profil P uniquement (celui à supprimer) puis la suppression de ceux-ci.

A l'étape 708, l'ISD-R 200 supprime les éléments constitutifs du profil P, notamment données et applications. Lors de cette opération, l'adaptateur inverse 212 ou 222 est ajouté dans les racines de persistance du JCRE afin de le conserver (il n'est pas vu et donc pas supprimé par l'ISD-R 200).

Suite à cette suppression des éléments constitutifs du profil P, l'environnement d'exécution initial 100 peut désormais être restauré lors de l'étape 710. Pour ce faire, l'ISD-R 200 appelle à nouveau la routine adaptative 110, qui récupère l'adaptateur inverse 212 ou 222 du profil P à supprimer, puis l'applique de sorte à restaurer l'environnement d'exécution initial 100.

A l'étape 712, l'ISD-R 200 supprime l'adaptateur inverse du profil P (après l'avoir retiré des racines de persistance du JCRE). Cette étape clôt la suppression complète du profil P. L'environnement d'exécution initial 100 peut ainsi reprendre la main sur l'exécution dans l'élément sécurisé 10.

Dans un mode de réalisation, une routine de nettoyage de l'environnement d'exécution peut déclencher, sur commande ou périodiquement ou sur tout autre événement, une opération de nettoyage des objets inutiles pour libérer de l'espace mémoire, alors même qu'aucun profil ne peut être actif. Cette routine peut ainsi considérer successivement tout ou partie des profils installés (par exemple le ou les profils déterminés selon une règle prédéfinie - à titre illustratif le dernier profil utilisé) et pour un profil P considéré :
- récupérer (étape 702) et appliquer (étape 704) l'adaptateur du profil P pour obtenir l'environnement d'exécution adapté ;
- lancer le garbage collector 112 (étape 706) pour collecter les objet du profil P et les supprimer (étape 708); puis
- récupérer et appliquer (étape 710) l'adaptateur inverse du profil P pour restaurer l'environnement d'exécution initial.

Les exemples qui précèdent ne sont que des modes de réalisation de l'invention qui ne s'y limite pas.

Notamment ces exemples concernent principalement une application de téléphonie mobile avec des profils P1, P2 d'abonnés, une infrastructure de réseau mobile et des opérateurs mobiles, ils sont transposables sans difficultés à tout type de profil de service (incluant les configurations selon GlobalPlatform), tout type de serveur distant et tout type de fournisseur de service.

## Revendications

1. Elément sécurisé (10) comprenant :
- un environnement d'exécution initial (100) constitué de code natif et/ou de code interprétable ; et
- au moins un domaine de sécurité distinct de l'environnement d'exécution, le au moins domaine de sécurité comprenant un premier profil de service (P1, P2, 210, 220), un profil de service comprenant des références d'un abonné pour s'authentifier sur un ou plusieurs réseaux de téléphonie mobile ;
- le au moins un domaine de sécurité comprenant des données adaptatives (211, 221) de l'environnement d'exécution initial en un environnement d'exécution adapté au premier profil de service et des données adaptatives inverses (212, 222) pour restaurer l'environnement d'exécution initial depuis l'environnement d'exécution adapté, les données adaptatives et adaptatives inverses étant constituées sous forme de liste de directives interprétables ;
- l'environnement d'exécution initial (100) comprenant une routine adaptative (110) configurée pour appliquer les données adaptatives à l'environnement d'exécution initial avant utilisation du premier profil de service et pour appliquer les données adaptatives inverses après utilisation du premier profil de service.

2. Elément sécurisé (10) selon la revendication 1, dans lequel la routine adaptative (110) est configurée pour appliquer les données adaptatives à l'environnement d'exécution initial lors d'une activation du premier profil de service et pour appliquer les données adaptatives inverses à l'environnement d'exécution adapté lors d'une désactivation ou suppression du premier profil de service.

3. Elément sécurisé (10) selon l'une des revendications 1 ou 2, comprenant en outre un moyen de communication pour recevoir les données adaptatives et les données adaptatives inverses au sein d'un package d'installation du premier profil de service transmis par un équipement externe (30).

4. Elément sécurisé (10) selon l'une des revendications 1 à 3, comprenant en outre un module de génération des données adaptatives inverses à partir des données adaptatives reçues d'un équipement réseau distant (30).

5. Elément sécurisé (10) selon l'une des revendications 1 à 4, comprenant en outre un deuxième profil choisi parmi :
- un profil de service utilisable dans l'environnement d'exécution initial,
- un profil de service utilisable dans un environnement d'exécution modifié obtenu par l'application d'autres données adaptatives (221) différentes desdites données adaptatives (211) à l'environnement d'exécution initial, ce profil de service comportant les autres données adaptatives et des autres données adaptatives inverses (222) pour restaurer l'environnement d'exécution initial depuis l'environnement d'exécution modifié.

6. Elément sécurisé (10) selon l'une des revendications 1 à 5, dans lequel les données adaptatives (211, 221) sont configurées pour adapter une classe Java initiale (108) de l'environnement d'exécution initial (100) à un format d'un objet instanciant la classe Java dans le premier profil de service, et les données adaptatives inverses (212, 222) sont configurées pour restaurer la classe Java initiale (108) depuis la classe Java adaptée.

7. Procédé d'exécution dans un élément sécurisé (10) comprenant un environnement d'exécution initial (100) constitué de code natif et/ou de code interprétable et au moins un domaine de sécurité distincts de l'environnement d'exécution, le au moins domaine de sécurité comprenant un premier profil de service (P1, P2, 210, 220), un profil de service comprenant des références d'un abonné pour s'authentifier sur un ou plusieurs réseaux de téléphonie mobile, le procédé comprenant les étapes suivantes :
- appliquer (504, 704), par une routine adaptative (110) de l'environnement d'exécution initial, des données adaptatives (211, 221), comprises dans le au moins un domaine de sécurité, de l'environnement d'exécution initial pour obtenir un environnement d'exécution adapté au premier profil de service,
- utiliser le premier profil de service dans l'environnement d'exécution adapté,
- puis appliquer (606, 710), par la routine adaptive, des données adaptatives inverses (212, 222), comprises dans le au moins un domaine de sécurité, à l'environnement d'exécution adapté pour restaurer l'environnement d'exécution initial, les données adaptatives et adaptatives inverses étant constituées sous forme de liste de directives interprétables.

8. Procédé selon la revendication 7, dans lequel les données adaptatives sont appliquées à l'environnement d'exécution initial lors d'une activation (500) du premier profil de service et les données adaptatives inverses sont appliquées à l'environnement d'exécution adapté lors d'une désactivation (600) ou suppression (700) du premier profil de service.

9. Procédé selon l'une des revendications 7 à 8, dans lequel l'élément sécurisé comprend en outre un deuxième profil choisi parmi :
- un profil de service utilisable dans l'environnement d'exécution initial,
- un profil de service utilisable dans l'environnement d'exécution modifié obtenu par l'application d'autres données adaptatives (221) différentes desdites données adaptatives (211) à l'environnement d'exécution initial, ce profil de service comportant les autres données adaptatives et des autres données adaptatives inverses (222) pour restaurer l'environnement d'exécution initial depuis l'environnement d'exécution modifié.

10. Support tangible comprenant un produit programme d'ordinateur comprenant des instructions configurées pour une mise en oeuvre des étapes du procédé selon l'une des revendications 7 à 9, lorsque ledit programme est exécuté par un élément sécurisé selon l'une des revendications 1 à 6.

## Patentansprüche

1. Sicheres Element (10), umfassend:
- eine initiale Ausführungsumgebung (100), die aus nativem Code und/oder interpretierbarem Code besteht; und
- mindestens eine Sicherheitsdomäne, die von der Ausführungsumgebung getrennt ist, wobei die mindestens eine Sicherheitsdomäne ein erstes Dienstprofil (P1, P2, 210, 220) umfasst, wobei ein Dienstprofil Referenzen eines Teilnehmers zur Authentifizierung in einem oder mehreren Mobilfunknetzen umfasst;
- wobei die mindestens eine Sicherheitsdomäne adaptive Daten (211, 221) zum Anpassen der initialen Ausführungsumgebung zu einer an das erste Dienstprofil angepassten Ausführungsumgebung und inverse adaptive Daten (212, 222) zur Wiederherstellung der initialen Ausführungsumgebung aus der angepassten Ausführungsumgebung umfasst, wobei die adaptiven und inversen adaptiven Daten in Form einer Liste mit interpretierbaren Direktiven ausgebildet sind;
- wobei die initiale Ausführungsumgebung (100) eine adaptive Routine (110) umfasst, die dazu konfiguriert ist, die adaptiven Daten vor der Verwendung des ersten Dienstprofils auf die initiale Ausführungsumgebung anzuwenden und die inversen adaptiven Daten nach der Verwendung des ersten Dienstprofils anzuwenden.

2. Sicheres Element (10) nach Anspruch 1, wobei die adaptive Routine (110) dazu konfiguriert ist, die adaptiven Daten bei einer Aktivierung des ersten Dienstprofils auf die initiale Ausführungsumgebung anzuwenden und die inversen adaptiven Daten bei einer Deaktivierung oder Löschung des ersten Dienstprofils auf die adaptierte Ausführungsumgebung anzuwenden.

3. Sicheres Element (10) nach einem der Ansprüche 1 oder 2, umfassend ferner ein Kommunikationsmittel zum Empfangen der adaptiven Daten und der inversen adaptiven Daten in einem Installationspakets für das erste Dienstprofil, das von einer externen Einrichtung (30) übertragen wird.

4. Sicheres Element (10) nach einem der Ansprüche 1 bis 3, umfassend ferner ein Modul zum Erzeugen der inversen adaptiven Daten ausgehend von den adaptiven Daten, die von einer entfernten Netzwerkeinrichtung (30) empfangen werden.

5. Sicheres Element (10) nach einem der Ansprüche 1 bis 4, umfassend ferner ein zweites Profil, das ausgewählt ist aus:
- einem Dienstprofil, das in der initialen Ausführungsumgebung verwendbar ist;
- einem Dienstprofil, das in einer modifizierten Ausführungsumgebung verwendbar ist, die durch die Anwendung weiterer adaptiver Daten (221), die von den adaptiven Daten (211) verschieden sind, auf die initiale Ausführungsumgebung erhalten wird, wobei dieses Dienstprofil die weiteren adaptiven Daten und weitere inverse adaptive Daten (222) zum Wiederherstellen der initialen Ausführungsumgebung aus der modifizierten Ausführungsumgebung beinhaltet.

6. Sicheres Element (10) nach einem der Ansprüche 1 bis 5, wobei die adaptiven Daten (211, 221) dazu konfiguriert sind, eine initiale Java-Klasse (108) der initialen Ausführungsumgebung (100) an ein Format eines Objekts anzupassen, das die Java-Klasse in dem ersten Dienstprofil instanziiert, und die inversen adaptiven Daten (212, 222) dazu konfiguriert sind, die initiale Java-Klasse (108) aus der adaptierten Java-Klasse wiederherzustellen.

7. Ausführungsverfahren in einem sicheren Element (10), umfassend eine initiale Ausführungsumgebung (100), die aus nativem Code und/oder interpretierbarem Code besteht, und mindestens eine Sicherheitsdomäne, die von der Ausführungsumgebung getrennt ist, wobei die mindestens eine Sicherheitsdomäne ein erstes Dienstprofil (P1, P2, 210, 220) umfasst, wobei ein Dienstprofil Referenzen eines Teilnehmers zur Authentifizierung in einem oder mehreren Mobilfunknetzen umfasst, wobei das Verfahren die folgenden Schritte umfasst:
- Anwenden (504, 704), durch eine adaptive Routine (110) der initialen Ausführungsumgebung, von adaptiven Daten (211, 221), die in der mindestens einen Sicherheitsdomäne enthalten sind, auf die initiale Ausführungsumgebung, um eine an das erste Dienstprofil angepasste Ausführungsumgebung zu erhalten,
- Verwenden des ersten Dienstprofils in der angepassten Ausführungsumgebung,
- anschließendes Anwenden (606, 710), durch die adaptive Routine, von inversen adaptiven Daten (212, 222), die in der mindestens einen Sicherheitsdomäne enthalten sind, auf die angepasste Ausführungsumgebung zur Wiederherstellung der initialen Ausführungsumgebung, wobei die adaptiven und inversen adaptiven Daten in Form einer Liste mit interpretierbaren Direktiven ausgebildet sind.

8. Verfahren nach Anspruch 7, wobei die adaptiven Daten bei einer Aktivierung (500) des ersten Dienstprofils auf die initiale Ausführungsumgebung angewendet werden und die inversen adaptiven Daten bei einer Deaktivierung (600) oder Löschung (700) des ersten Dienstprofils auf die adaptierte Ausführungsumgebung angewendet werden.

9. Verfahren nach einem der Ansprüche 7 bis 8, wobei das sichere Element ferner ein zweites Profil umfasst, das ausgewählt ist aus:
- einem Dienstprofil, das in der initialen Ausführungsumgebung verwendbar ist;
- einem Dienstprofil, das in der modifizierten Ausführungsumgebung verwendbar ist, die durch die Anwendung weiterer adaptiver Daten (221), die von den adaptiven Daten (211) verschieden sind, auf die initiale Ausführungsumgebung erhalten wird, wobei dieses Dienstprofil die weiteren adaptiven Daten und weitere inverse adaptive Daten (222) beinhaltet zur Wiederherstellung der initialen Ausführungsumgebung aus der modifizierten Ausführungsumgebung beinhaltet.

10. Greifbares Medium, das ein Computerprogrammprodukt umfasst, das Anweisungen umfasst, die dazu konfiguriert sind, bei der Ausführung des Programms durch ein sicheres Element nach einem der Ansprüche 1 bis 6 die Schritte des Verfahrens nach einem der Ansprüche 7 bis 9 durchzuführen.

## Claims

1. Secure element (10) comprising:
- an initial execution environment (100) consisting of native code and/or interpretable code; and
- at least one security domain which is distinct from the execution environment, the at least one security domain comprising a first service profile (P1, P2, 210, 220), a service profile comprising credentials of a subscriber for authenticating on one or more mobile telephone networks;
- the at least one security domain comprising adaptive data (211, 221) which adapt the initial execution environment into an execution environment adapted to the first service profile and inverse adaptive data (212, 222) for restoring the initial execution environment from the adapted execution environment, the adaptive data and inverse adaptive data being constituted in the form of a list of interpretable directives;
- the initial execution environment (100) comprising an adaptive routine (110) configured to apply the adaptive data to the initial execution environment before the first service profile is used and to apply the inverse adaptive data after the first service profile is used.

2. Secure element (10) according to Claim 1, wherein the adaptive routine (110) is configured to apply the adaptive data to the initial execution environment when the first service profile is activated and to apply the inverse adaptive data to the adapted execution environment when the first service profile is deactivated or deleted.

3. Secure element (10) according to one of Claims 1 and 2, further comprising a communication means for receiving the adaptive data and the inverse adaptive data within an installation package of the first service profile transmitted by external equipment (30).

4. Secure element (10) according to one of Claims 1 to 3, further comprising a module for generating the inverse adaptive data on the basis of the adaptive data received from remote network equipment (30).

5. Secure element (10) according to one of Claims 1 to 4, further comprising a second profile chosen from among:
- a service profile which can be used in the initial execution environment,
- a service profile which can be used in a modified execution environment obtained by applying other adaptive data (221) which are different from said adaptive data (211) to the initial execution environment, this service profile comprising the other adaptive data and other inverse adaptive data (222) for restoring the initial execution environment from the modified execution environment.

6. Secure element (10) according to one of Claims 1 to 5, wherein the adaptive data (211, 221) are configured to adapt an initial Java class (108) of the initial execution environment (100) to a format of an object instantiating the Java class in the first service profile, and the inverse adaptive data (212, 222) are configured to restore the initial Java class (108) from the adapted Java class.

7. Method for execution in a secure element (10) comprising an initial execution environment (100) consisting of native code and/or interpretable code and at least one security domain which are distinct from the execution environment, the at least one security domain comprising a first service profile (P1, P2, 210, 220), a service profile comprising credentials of a subscriber for authenticating on one or more mobile phone networks, the method comprising the following steps:
- applying (504, 704), by means of an adaptive routine (110) of the initial execution environment, adaptive data (211, 221), comprised in the at least one security domain, which adapt the initial execution environment in order to obtain an execution environment adapted to the first service profile,
- using the first service profile in the adapted execution environment,
- then applying (606, 710), by means of the adaptive routine, inverse adaptive data (212, 222), comprised in the at least one security domain, to the execution environment adapted to restore the initial execution environment, the adaptive and inverse adaptive data being constituted in the form of a list of interpretable directives.

8. Method according to Claim 7, wherein the adaptive data are applied to the initial execution environment when the first service profile is activated (500) and the inverse adaptive data are applied to the adapted execution environment when the first service profile is deactivated (600) or deleted (700).

9. Method according to one of Claims 7 to 8, wherein the secure element further comprises a second profile selected from among:
- a service profile which can be used in the initial execution environment,
- a service profile which can be used in the modified execution environment obtained by applying other adaptive data (221) which are different from said adaptive data (211) to the initial execution environment, this service profile comprising the other adaptive data and other inverse adaptive data (222) for restoring the initial execution environment from the modified execution environment.

10. Tangible medium comprising a computer program product comprising instructions which are configured for implementing the steps of the method according to one of Claims 7 to 9, when said program is executed by a secure element according to one of Claims 1 to 6.
